## Europäisches Patentamt

## European Patent Office

## Office européen des brevets

(19)

(11) Veröffentlichungsnummer: **0 145 986**
**B1**

(12)

# EUROPÄISCHE PATENTSCHRIFT

(45) Veröffentlichungstag der Patentschrift:
**09.03.88**

(51) Int. Cl.⁴: **F 02 M 55/00,** F 02 M 37/00,
**F 02 M 31/16**

(21) Anmeldenummer: **84113940.5**

(22) Anmeldetag: **17.11.84**

(54) Einrichtung zur temperaturabhängigen Umschaltung der Überströmmenge einer Diesel-Einspritzpumpe.

(30) Priorität: **15.12.83 DE 3345391**

(43) Veröffentlichungstag der Anmeldung:
**26.06.85 Patentblatt 85/26**

(45) Bekanntmachung des Hinweises auf die Patenterteilung:
**09.03.88 Patentblatt 88/10**

(84) Benannte Vertragsstaaten:
**DE FR GB IT**

(56) Entgegenhaltungen:
**DE - A - 3 146 454**
**FR - A - 2 256 358**
**FR - A - 2 386 692**
**FR - A - 2 540 563**
**GB - A - 2 028 921**
**GB - A - 2 031 994**
**US - A - 4 133 478**

**PATENTS ABSTRACTS OF JAPAN, Band 7, Nr. 24**
**(M-189)[1169], 29. Januar 1983; & JP - A - 57 177 470**
**(AISAN KOGYO K.K.) 01.11.1982**

(73) Patentinhaber: **ROBERT BOSCH GMBH, Postfach 50,
D-7000 Stuttgart 1 (DE)**

(72) Erfinder: **Müller, Willi, Wiesenstrasse 38,
D-7247 Sulz-Sigm. (DE)**
Erfinder: **Schacht, Hans, Leharstrasse 12,
D-7000 Stuttgart 1 (DE)**
Erfinder: **Scholz, Erich, Adenauerstrasse 34,
D-7303 Neuhausen (DE)**
Erfinder: **Straubel, Max, Dr., Ontariostrasse 30B,
D-7000 Stuttgart 61 (DE)**

## Beschreibung

Stand der Technik

Die Erfindung geht aus von einer Einrichtung zur temperaturabhängigen Umschaltung der Überströmmenge einer Diesel-Einspritzpumpe zu einem Kraftstofftank oder zur Zulaufseite der Einspritzpumpe nach der Gattung des Hauptanspruchs.

Es ist schon eine solche Einrichtung aus der FR-A-2 386 692 bekannt, bei der zur Umschaltung des Dieselkraftstoffs ein einseitig fest eingespanntes, stabartiges Bimetallelement verwendet wird, dessen freies Ende mit einem Rohrende das die Verbindung zum Tank steuernde Ventil bildet. Parallel zu diesem Ventil ist ein Drucksteuerventil geschaltet, über das die Überströmmenge auf die Zulaufseite der Einspritzpumpe geleitet wird. Obwohl hier das Bimetallelement von der Überströmmenge der Einspritzpumpe umströmt wird, arbeitet dieses Ventil mit relativ grosser Hysterese und weist keinen genauen Schaltpunkt auf. Zudem baut dieses Ventil aufwendig und vor allem kann die erwärmte Überströmmenge nicht zum Aufheizen des Filters herangezogen werden. Fernerhin ist von Nachteil, dass keine Massnahmen zur Entlüftung des Dieselkraftstoffs vorgesehen sind.

Ferner ist eine Einrichtung aus der US-A-3 768 454 bekannt, bei der zur Umschaltung des Dieselkraftstoffs in der Längsbohrung eines Gehäuses ein längsbeweglicher Kolbenschieber angeordnet ist, der von einem Thermostat entgegen der Kraft einer Feder betätigbar ist. Diese Einrichtung baut mit Längsschieber und Thermostat relativ aufwendig, teuer und beansprucht viel Raum. Ferner ist von Nachteil, dass der Thermostat verschmutzungsanfällig ist und eine relativ grosse Hysterese aufweist. Es ist daher besonders schwierig, die Einrichtung sowohl für einen Sommerbetrieb als auch für einen Winterbetrieb einwandfrei einzustellen. Von Nachteil ist ferner, dass der Thermostat stets im Hauptstrom des Dieselkraftstoffs liegt und somit entweder dem vom Tank kommenden Dieselkraftstoff oder einem Mischstrom aus letzterem und der Überströmmenge von der Einspritzpumpe ausgesetzt ist. Diese Anordnung erhöht Verschleiss und Hysterese in der Einrichtung vor allem deswegen, weil in einer Kaltstartphase keine Dauerentlüftung möglich ist, insbesondere im kurzen Kreislauf der Überströmmenge.

Ferner ist aus der US-PS 2 917 110 ein Filter bekannt, bei dem die Öffnung eines Entlüftungsrohres zum Dampfblasenabbau von einem Bimetall-Schliessglied temperaturabhängig gesteuert wird. Dieses Filter ist nicht für Dieselkraftstoffe vorgesehen. Von Nachteil ist ferner, dass auch hier das Bimetall-Schliessglied auf der Reinseite des Filters dem Hauptstrom ausgesetzt ist. Zudem hat das Schliessglied eine relativ aufwendige, komplizierte Form und kann auch keinen Schnappeffekt ausführen. Wenn das Schliessglied seine zugeordnete Öffnung verschliesst, kann keine Dauerentlüftung mehr stattfinden. Im übrigen findet hier keine Kraftstoffrückführung von einer Diesel-Einspritzpumpe statt.

Weiterhin ist es aus der GB-A-2 028 921 bekannt, bei einem einer Einspritzpumpe im Zulauf vorgeschalteten Filter eine Entlüftungs-Drossel zum Tank vorzusehen. Hier wird jedoch keine Überströmmenge temperaturabhängig umgeschaltet und auch die Überströmmenge selbst nicht entlüftet.

Fernerhin ist es aus der FR-A-2 256 358 und der US-PS 4 133 478 bekannt, bei temperaturabhängig schaltenden Ventilen als Bimetallelement ausgebildete Schnappscheiben zu verwenden, die jedoch nicht zur Steuerung der Überströmmenge einer Einspritzpumpe dienen.

Vorteile der Erfindung

Die erfindungsgemässe Einrichtung mit den kennzeichnenden Merkmalen des Hauptanspruchs hat demgegenüber den Vorteil, dass sie bei geringem Aufwand eine wirksame Erwärmung des Dieselkraftstoffs ermöglicht, wobei sie den unterschiedlichen Anforderungen im Betrieb gerecht wird. Die Einrichtung baut zudem äusserst kompakt und kann bei vorhandenen Dieselkraftstoff-Filtern ohne weiteres nachgerüstet werden. Durch die Lage des Bimetallelements in einem nur von der Überströmmenge der Einspritzpumpe erreichbaren Bereich in Verbindung mit dem Schnappeffekt der Bimetallscheibe arbeitet die Einrichtung hysterese- und verschleissarm und ist auf unterschiedliche Betriebszustände gut einstellbar. Dabei ist der Rücklaufdruck der Überströmmenge genau definiert, so dass die Funktion der Einspritzpumpe nicht beeinträchtigt wird. Durch die einwandfreie Entlüftung ist darüber hinaus dafür gesorgt, dass Schwierigkeiten beim Start und im Betrieb ausgeschaltet werden. Durch die Entlüftungs-Drossel fliesst in jedem Betriebszustand ein kleiner Teilstrom ständig in den Tank zurück. Dadurch wird im System anfallende Luft kontinuierlich zum Tank hin abgebaut und das Einspritzsystem zwischen Filter und Einspritzpumpe ist frei von Luftblasen. Die Diesel-Einspritzpumpe kommt schneller auf Betriebstemperatur; dadurch bedingt ergibt sich am zugehörigen Motor eine geringere Schadstoff-Emission und zudem ein besseres Leerlaufverhalten. Die Bimetallscheibe schaltet zwischen zwei Grenzwerten, so dass im Kaltbetrieb immer erwärmter Kraftstoff in ausreichend grossem Masse in das Filter und im Warmbetrieb die gesamte Überströmmenge direkt in den Tank fliessen. Wenn dabei im Kaltbetrieb dem Filter ein Strom zugeführt wird, von dem der zwangsweise zugeführte Anteil ca. 2/3 ausmacht und bereits gefiltert ist, so erhöht dies die Standzeit des Filters beträchtlich. Zudem baut die Einrichtung auch platzsparend und kostengünstig.

Durch die in den Unteransprüchen aufgeführten Massnahmen sind vorteilhafte Weiterbildungen und Verbesserungen der im Hauptanspruch angegebenen Einrichtung möglich. Gemäss Anspruch 2 kann eine Dauerentlüftung besonders einfach und billig ausgestaltet werden, so dass die Einrichtung in ihrer Funktion nicht gefährdet wird. Dies hat auch den Vorteil, dass der zur Dauerentlüftung abfliessende Teilstrom die Bimetall-Schnappscheibe schneller erwärmt bzw. kühlt, so dass schnell und genau umgeschaltet wird. Die Ausbildung nach Anspruch 3 und 4 ermöglicht darüber hinaus eine Funktion der Schnappscheibe als Sicherheitsventil, das den Druck im Überströmanschluss der Einspritzpumpe begrenzt. Nach Anspruch 5 lässt sich eine besonders einfache und nachrüstbare Bauart der Einrichtung erreichen. Weitere vorteilhafte Ausgestaltungen ergeben sich aus den übrigen Ansprüchen.

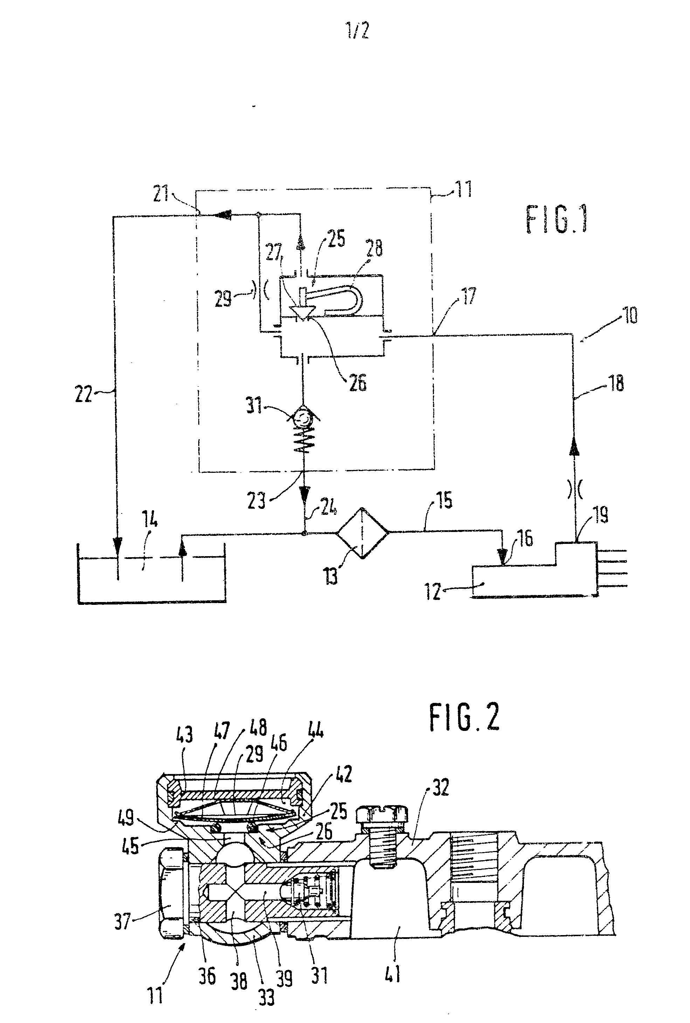

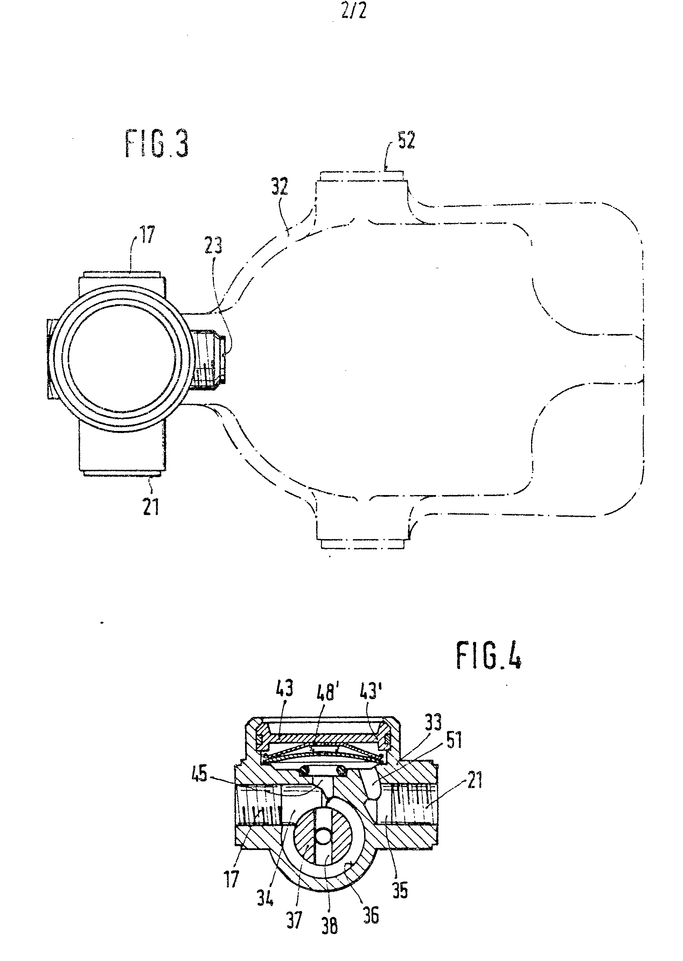

Ein Ausführungsbeispiel der Erfindung ist in der Zeichnung dargestellt und in der nachfolgenden Beschreibung näher erläutert. Es zeigen Figur 1 ein Kraftstoffversorgungssystem mit der erfindungsgemässen Einrichtung in vereinfachter Darstellung, Figur 2 einen Querschnitt durch die Einrichtung nach Figur 1 in an einem Filterdeckel angebauten Zustand, Figur 3 eine Draufsicht auf die Einrichtung mit Filterdeckel und Figur 4 einen Längsschnitt durch die Einrichtung.

Beschreibung des Ausführungsbeispiels

Die Figur 1 zeigt als Schaltschema ein Kraftstoff-Versorgungssystem 10, das neben einer Einrichtung 11 zur temperaturabhängigen Umschaltung der Überströmmenge einer Diesel-Einspritzpumpe 12 ein Filter 13 sowie einen Tank 14 aufweist. Das Filter 13 liegt dabei in einer Zulaufleitung 15, über welche Diesel-Kraftstoff aus dem Tank 14 zu einem Eingang 16 der Einspritzpumpe 12 geführt wird.

Die Einrichtung 11 hat einen Zulaufanschluss 17, der über eine Überströmleitung 18 mit einem Überströmausgang 19 an der Einspritzpumpe 12 verbunden ist. Von einem Rücklaufanschluss 21 der Einrichtung 11 führt eine Rücklaufleitung 22 zum Tank 14. Ein Ablaufanschluss 23 der Einrichtung steht über einen Kanal 24 mit einem Abschnitt der Zulaufleitung 15 unmittelbar stromaufwärts vom Filter 13 in Verbindung.

Die Einrichtung 11 weist ein temperaturabhängiges Schaltventil 25 auf, das in der Verbindung zwischen Zulaufanschluss 17 und Rücklaufanschluss 21 liegt. Im Schaltventil 25 ist einem Ventilsitz 26 ein Steuerglied 27 zugeordnet, das von einem Bimetallelement 28 betätigbar ist. Parallel zum Schaltventil 25 ist in die Verbindung zwischen den Zulaufanschluss 17 und den Rücklaufanschluss 21 für eine Dauerentlüftung eine Drossel 29 geschaltet. Im übrigen steht in der Einrichtung 11 der Zulaufanschluss 17 unbeeinflusst vom Schaltventil 25 mit dem Ablaufanschluss 23 in Verbindung, wobei letzterem (23) ein Drucksteuerventil 31 vorgeschaltet ist, das nur zum Ablaufanschluss 23 hin öffnen kann. Das Bimetallelement 28 in der Einrichtung 11 kann somit nur von der Überströmmenge der Diesel-Einspritzpumpe 12 umströmt werden.

Eine konstruktive Ausführungsform der Einrichtung 11 zeigen die Figuren 2 bis 4, auf die im folgenden näher eingegangen wird, wobei gleiche Bauelemente wie in Figur 1 mit gleichen Bezugszeichen versehen werden.

Wie die Figur 2 näher zeigt, ist die Einrichtung 11 an einem Deckel 32 des Filters 13 befestigt. Die Einrichtung 11 hat ein Gehäuse 33, in dem von einander gegenüberliegenden Stirnflächen her sacklochartige Ausnehmungen 34, 35 koaxial zueinander eingebracht sind, wie dies Figur 4 näher zeigt. Dabei bildet die erste Ausnehmung 34 den Zulaufanschluss 17, die zweite Ausnehmung 35 den Rücklaufanschluss 21. Senkrecht zur Längsachse der Ausnehmungen 34, 35 verläuft im Gehäuse 33 eine nur die erste Ausnehmung 34 schneidende Bohrung 36, welche das Gehäuse 33 durchdringt und eine Hohlschraube 37 aufnimmt, mit welcher das Gehäuse 33 dicht und fest am Deckel 32 montiert ist. Dabei steht die erste Ausnehmung 34 über Radial- 38 und Längskanäle 39 mit der Schmutzseite 41 im Filterdeckel 32 in Verbindung. Zugleich ist im Längskanal 39 der Hohlschraube 37 das Drucksteuerventil 31 angeordnet, das nur einen geringen Öffnungsdruck aufweist und zur Schmutzseite 41 hin öffnet.

Das Gehäuse 33 weist im Bereich einer durch die Hohlschraube 37 verlaufenden, lotrechten Ebene einen nach oben hin sich trichterförmig erweiternden Ansatz 42 auf. Ein im Ansatz 42 befestigter Deckel 43 begrenzt im Gehäuse 33 einen Entlüftungs-Raum 44, der über eine Bohrung 45 mit der ersten Ausnehmung 34 in Verbindung steht. Am Übergang von Bohrung 45 in den Druckraum 44 ist der Ventilsitz 26 ausgebildet, der hier als O-Ring 46 ausgeführt ist. Mit dem O-Ring 46 arbeitet eine im Entlüftungs-Raum 44 angeordnete Bimetall-Schnappscheibe 47 zusammen, die an ihrem äusseren Rand einerseits an einer vierarmigen Haltefeder 48 anliegt und mit ihrem Rand andererseits bei der in Figur 2 dargestellten Sperrstellung im Kaltbetrieb in geringem Abstand von einer gehäusefesten Schulter 49 liegt. Der Aussendurchmesser der Schnappscheibe 47 ist erheblich grösser als der Durchmesser des O-Rings 46. Zentrisch in der Schnappscheibe 47 ist die Drossel 29 für die Dauerentlüftung vorgesehen. Wie aus Figur 4 näher ersichtlich ist, führt vom Entlüftungs-Raum 44 im Bereich zwischen O-Ring 46 und gehäusefester Schulter 49 eine Querbohrung 51 in die zweite Ausnehmung 35. In der Bimetall-Schnappscheibe 47 sind somit die beiden Funktionen des Steuerglieds 27 und des Betätigungselements 28 vereint, indem es die Verbindung von dem Zulaufanschluss 17 zum Rücklaufanschluss 21 steuert und zugleich das Schaltventil 25 temperaturabhängig betätigt.

Die Wirkungsweise der Einrichtung 11 wird wie folgt erläutert:

Beim Betrieb des Kraftstoff-Versorgungssystem 10 strömt Dieselkraftstoff vom Tank 14 über die Zulaufleitung 15 und das Filter 13 zum Eingang 16 der Diesel-Einspritzpumpe 12. Bei Temperaturen um ca. 0 °C beginnt beim Dieselkraftstoff die Paraffinausscheidung. Solche Paraffinausscheidungen können das Filter 13 zusetzen und damit zu Betriebsstörungen führen. Durch Anwärmen des Filters bzw. Dieselkraftstoffes wird nun versucht, das Kraftstoff-Versorgungssystem 10 auch in einem beträchtlichen Temperaturbereich unterhalb des Ausscheidungspunktes von Paraffin zu betreiben, ohne dass hierbei das Filter 13 durch Paraffinausscheidungen verstopft wird. Dabei wird nun die Erkenntnis ausgenutzt, dass in der Einspritzpumpe 12 der am Überströmausgang 19 abgegebene Kraftstoff erwärmt wird, wobei abhängig vom Lastzustand diese Erwärmung ca. 5 bis 15 °C betragen kann. Diese erwärmte Überströmmenge gelangt über den Zulaufanschluss 17 in das Gehäuse 33 und erwärmt auch den Kraftstoff im Bereich der Bimetall-Schnappscheibe 47.

Die Bimetall-Schnappscheibe 47 ist nun so ausgelegt, dass sie bei einer Kraftstofftemperatur von ca. 15 °C ihre in Figur 2 gezeichnete Sperrstellung einnimmt und dabei die Verbindung vom Zulaufanschluss 17 zum Rücklaufanschluss 35 sperrt. Hierbei ist die Schnappscheibe 47 nach unten durchgewölbt und liegt nur an dem als Ventilsitz 26 dienenden O-Ring 46 an, während ihr äusserer Rand sich im Abstand von der Schulter 49 befindet, so dass über einen dazwischen ausgebildeten Ringspalt der Entlüftungs-Raum 44 stets mit der Querbohrung 51 verbunden und damit zum Rücklaufanschluss 21 und weiter zum Tank 14 entlastet ist. Die im Zulaufanschluss 17 ankommende Überströmmenge muss somit über die Radial- und Längskanäle 38, 39 sowie das Drucksteuerventil 31 und den Ablaufanschluss 23 auf die Schmutzseite 41 im Filter 13 abströmen. Die über den Ablaufanschluss 23 kommende, erwärmte Überströmmenge kann sich im Filterdeckel 32 mit dem kühleren Dieselkraftstoff aus dem Tank 14, der z.B. über den Anschluss 52 am Deckel 32 zufliessen kann, mischen und über das Filter 13 weiter zur Einspritzpumpe 12 strömen. Durch den gemischten und damit erwärmten Kraftstoffstrom im Filter 13 wird erreicht, dass die Gefahr eines Zusetzens des Filters 13 durch Paraffinausscheidung verringert wird. Dies besonders deswegen, weil der zwangsweise zurückgeführte Dieselkraftstoff, der etwa zwei Drittel des dem Filter zufliessenden Stromes ausmacht, bereits gefiltert ist und nur ca. 1/3 Strom ungefiltert aus dem Tank 14 hinzukommt, Das Drucksteuerventil 31 stromaufwärts vom Ablaufanschluss 23 verursacht hierbei lediglich eine Druckdifferenz von ca. 0,3 bar; es ist damit gewährleistet, dass die Funktion der Einspritzpumpe 12 nicht durch zu hohen Druck im Überströmausgang 19 gefährdet wird. Zudem hat dieses Drucksteuerventil 31 den Vorteil, dass die Einspritzpumpe 12 im Kurzschlussbetrieb über die Überströmleitung 18 und den Kanal 24 keine Luft ansaugen kann. Über die Überströmleitung 18 und den Zulaufanschluss 17 in das Gehäuse 33 gelangende Luftblasen können während des Kaltbetriebs durch einen kleinen, abzweigenden Teilstrom über die ständig offene Drossel 29 sicher zum Kraftstofftank 14 abgeführt werden. Dabei ist gerade beim Start von Vorteil, dass sich Luft wegen seiner geringeren Viskosität gegenüber derjenigen von Dieselkraftstoff schnell über die Drossel 29 zum Tank 14 abbaut, und der relativ niedrige Öffnungdruck des Drucksteuerventils 31 erst erreicht wird, wenn nur noch Dieselkraftstoff über die Überströmleitung 18 kommt. Störungen beim Start und im Betrieb sind daher weitgehend ausgeschaltet, da das Einspritzsystem zwischen Filter 13 und Einspritzpumpe 12 frei von Luftblasen ist bzw. schnell entlüftet wird.

Der zur Dauerentlüftung während des Kaltbetriebs über die Drossel 29 ständig abfliessende Teilstrom hat auch den Vorteil, dass er die von unten her innerhalb des O-Ringes vom erwärmten Kraftstoff beaufschlagte Bimetallscheibe 47 auch von oben her mit erwärmten Kraftstoff benetzt, so dass Temperaturänderungen rasch übertragen werden und der Schaltpunkt der Schnappscheibe 47 genau eingehalten wird.

Hat die Überströmmenge im Zulaufanschluss 17 schliesslich eine Temperatur von ca. 40 °C erreicht, so schnappt die Bimetallscheibe 47 in ihre Offenstellung um, wie dies in Figur 4 dargestellt ist, und gibt dem Dieselkraftstoff den Weg vom Zulaufanschluss 17 zum Rücklaufanschluss 21 frei. Das Drucksteuerventil 31 schliesst daraufhin und der Druck von ca. 0,3 bar baut sich ab. Das Schaltventil 25 schaltet somit schlagartig um, so dass eine im Betrieb störende Hysterese nicht auftritt. Die Gefahr einer Verschmutzung der Bimetall-Schnappscheibe 47 ist relativ gering, da sie nur noch von der Überströmmenge umströmt wird und nicht mehr im Dieselkraftstoff-Hauptstrom liegt. Zudem baut die Schnappscheibe 47 relativ einfach und kompakt und gewährleistet einen sicheren und robusten Betrieb. Durch die Lage der Bimetallscheibe 47 in der Überströmmenge kann die Einrichtung 11 so eingestellt werden, dass sie sowohl den Anforderungen im Winterbetrieb als auch im Sommerbetrieb gerecht wird. Wenn die Schnappscheibe 47 in ihre Offenstellung nach Figur 4 gesprungen ist, ist der Abstand zwischen O-Ring 46 und Schnappscheibe 47 so gross, dass ein ausreichender Durchflussquerschnitt für die abfliessende Überströmmenge erreicht wird. In der Offenstellung liegt die Schnappscheibe mit ihrem Rand am äusseren Umfang an der Schulter 49 an.

Bei der in Figur 4 gezeigten Variante der Befestigung des Deckels 43' wie auch bei der Bauart nach Figur 2 kann darüber hinaus das Schaltventil 25 die Funktion eines Sicherheitsventils übernehmen, wobei die nach unten durchgewölbte Bimetall-Schnappscheibe 47 gegen die Kraft der Haltefeder 48' nach oben gedrückt wird und der Überströmmenge den Weg zum Rücklaufanschluss 21 freigibt. Die Haltefeder 48' kann hierbei so ausgelegt sein, dass diese Sicherheitsfunktion bei einem Druck von ca. 1 bar auftritt und somit die Einspritzpumpe 12 zusätzlich gegen eine Fehlfunktion schützt.

Selbstverständlich sind Änderungen an der gezeigten Einrichtung 11 möglich, ohne vom Gedanken der Erfindung abzuweichen. Insbesondere ist die Einrichtung nicht auf die als Beispiele angegebenen Druck- und Temperatureinstellungen begrenzt. Auch kann das Gehäuse 33 der Einrichtung anstelle der Hohlschraube 37 über eine Doppelhohlschraube am Deckel 32 befestigt werden, so dass die wärmere Überströmmenge und der kühlere Kraftstrom vom Tank über den gleichen Zulaufstutzen am Deckel 32 zur Schmutzseite 41 gelangen.

**Patentansprüche**

1. Einrichtung (11) zur temperaturabhängigen Umschaltung der Überströmmenge einer Diesel-Einspritzpumpe (12) zu einem Kraftstofftank (14) oder zur Zulaufseite der Einspritzpumpe (12), mit einem mit dem Überströmausgang (19) der Einspritzpumpe (12) verbindbaren Zulaufanschluss (17), mit einem mit dem Kraftstofftank verbindbaren Rücklaufanschluss (21) und mit einem Ablaufanschluss (23) sowie mit einem von einem temperaturempfindlichen Bauelement betätigten, die Umschaltung bewirkenden Steuerglied (27; 48), wobei das zum Betätigen des Steuerglieds (27; 48) dienende Bauelement als Bimetallelement (28) ausgebildet ist, das nur von der Überströmmenge der Einspritzpumpe (12) umströmt wird, und mit einem den Ablaufanschluss (23) absichernden Drucksteuerventil (31), das parallel zu dem zwischen Zulaufanschluss (17) und Rücklaufanschluss (21) liegenden Steuerglied (27) geschaltet ist und mit einem in die Zulaufseite der Einspritzpumpe (12) geschalteten Filter (13), dadurch gekennzeichnet, dass das Bimetallelement als eine die Funktion des Steuerglieds übernehmende Schnappscheibe (47) ausgebildet ist, die mit einem gehäusefesten Ventilsitz (46) zusammenwirkt, dass der Ablaufanschluss (23) mit dem Eingang des Filters (13) verbunden ist und der Zulaufanschluss (17) über eine Entlüftungs-Drossel (29) ständig mit dem Rücklaufanschluss (21) in Verbindung steht, wobei die Entlüftungs-Drossel (29) parallel zum Steuerglied (27; 48) geschaltet ist.

2. Einrichtung nach Anspruch 1, dadurch gekennzeichnet, dass die Entlüftungs-Drossel (29) in der Bimetall-Schnappscheibe (47), insbesondere zentrisch, angeordnet ist.

3. Einrichtung nach Anspruch 2, dadurch gekennzeichnet, dass der Ventilsitz als O-Ring (46) ausgebildet ist.

4. Einrichtung nach einem der Ansprüche 2 oder 3, dadurch gekennzeichnet, dass die Bimetall-Schnappscheibe (47) an ihrem Aussenumfang von einer Haltefeder (48) im Gehäuse (33) abgestützt ist.

5. Einrichtung nach einem oder mehreren der Ansprüche 1 bis 4, dadurch gekennzeichnet, dass an einem Gehäuse (33) auf einander gegenüberliegenden Seiten der Zulauf- (17) und der Rücklaufanschluss (21) ausgebildet sind und quer zu diesen Anschlüssen (17, 21) eine dem Ablaufanschluss (23) zugeordnete Bohrung (36) verläuft und dass mit einer durch diese Bohrung (36) steckbare Hohlschraube (37) das Gehäuse (33) an einem Zulaufanschluss eines Filterdeckels (32) befestigbar ist, wobei die Hohlschraube (37) das Drucksteuerventil (31) aufnimmt.

6. Einrichtung nach Anspruch 5, dadurch gekennzeichnet, dass der Ventilsitz (46) mit Bimetall-Schnappscheibe (47) und Entlüftungs-Raum (44) oberhalb und die Hohlschraube (37) unterhalb der von Zulauf- und Ablaufanschluss (17, 21) gebildeten Längsachse im Gehäuse (33) angeordnet sind.

7. Einrichtung nach einem der Ansprüche 1 bis 6, dadurch gekennzeichnet, dass die Bimetall-Schnappscheibe (47) in ihrer Sperrstellung bei Kaltbetrieb nur am Ventilsitz (26, 46) anliegt und ihr äusserer Rand mit der Gehäuse-Schulter (49) einen Ringspalt bildet über den der Entlüftungs-Raum (44) mit dem Rücklaufanschluss (21) in Verbindung steht.

**Revendications**

1.–Dispositif (11) servant à dévier, en fonction de la température, le reflux d'une pompe d'injection diesel (12) vers un réservoir de carburant (14) ou vers le côté entrée de la pompe d'injection (12), dispositif comportant un raccordement d'arrivée (17) susceptible d'être relié à la sortie (19) du reflux de la pompe d'injection (12), un raccordement de retour (21) susceptible d'être relié au réservoir de carburant, et un raccordement de décharge (23), ce dispositif comportant également, un organe de commande (27, 48) assurant la déviation et actionné par un élément constitutif sensible à la température, cet élément constitutif servant à actionner l'organe de commande (27, 48), étant réalisé sous la forme d'un élément bilame (28) qui est en contact uniquement avec le courant de reflux de la pompe d'injection (12), le dispositif comportant aussi une soupape de contrôle de la pression, protégeant le raccordement de décharge (23) et qui est branchée en parallèle à l'organe de commande (27) placé entre le raccordement d'arrivée (17), et le raccordement de retour (21), un filtre (13), branché sur le côté entrée de la pompe d'injection (12), étant, en outre, prévu, dispositif caractérisé en ce que l'élément bilame est réalisé sous la forme d'un disque à déclic (47) assumant la fonction de l'organe de commande et qui coopère avec un siège de soupape (46) fixe par rapport au boîtier, le raccordement de décharge (23) étant relié à l'entrée du filtre (13), et le raccordement d'arrivée (17) étant constamment en communication par l'intermédiaire d'un étranglement de désaération (29) avec le raccordement de retour (21), cet étranglement de désaération (29) étant branché en parallèle par rapport à l'organe de commande (27, 48).

2.–Dispositif selon la revendication 1, caractérisé en ce que l'étranglement de désaération (29) est disposé sur le disque bilame à déclic (27) et notamment en son centre.

3.–Dispositif selon la revendication 2, caractérisé en ce que le siège de soupape est un anneau torique (46).

4.–Dispositif selon une des revendications 2 ou 3, caractérisé en ce que le disque bilame à déclic (47) prend appui à sa périphérie sur un ressort de maintien (48) dans le boîtier (33).

5.–Dispositif selon une ou plusieurs des revendications 1 à 4, caractérisé en ce que le raccordement d'arrivée (17) et le raccordement de retour (21) sont ménagés sur les côtés opposés l'un à l'autre d'un boîtier (33), et que, transversalement par rapport à ces raccordements (17, 21), s'étend un perçage (36) associé au raccordement de décharge (23), tandis que, grâce à une vis creuse (37), susceptible d'être enfilée à travers ce perçage (36), le boîtier (33) est susceptible d'être fixé à un raccordement d'entrée d'un couvercle de filtre (32), la soupape (31) de contrôle de la pression étant logée dans la vis creuse (37).

6.–Dispositif selon la revendication 5, caractérisé en ce que le siège de soupape (46) avec le disque bilame à déclic (47) et la chambre de désaération (44) sont disposés au-dessus de l'axe longitudinal, constitué par le raccordement d'arrivée et le raccordement de retour (17, 21) dans le boîtier (33), tandis que la vis creuse (37) est disposée au-dessous.

7.–Dispositif selon une des revendications 1 à 6, caractérisé en ce que le disque bilame à déclic (47) s'applique seulement sur le siège de soupape (26, 46) dans sa position de fermeture lors du fonctionnement à froid, et son bord externe ménage avec l'épaulement (49) du boîtier un intervalle annulaire par l'intermédiaire duquel la chambre de désaération (44) est en communication avec le raccordement de retour (21).

**Claims**

1. Apparatus (11) for the temperature-dependent switching of the quantity of overflow of a diesel injection pump (12) to a fuel tank (14) or to the feed side of the injection pump (12), with a feed connection (17), which can be connected to the overflow outlet (19) of the injection pump (12), with a return connection (21), which can be connected to the fuel tank, and with a drain connection (23), as well as with a control member (27; 48), operated by a temperature-sensitive structural element and effecting the switching, the structural element serving to operate the control member (27; 48) being designed as a bimetal element (28), which only has the quantity of overflow of the injection pump (12) flowing around it, and with a pressure control valve (31), which protects the drain connection (23) and is connected in parallel with the control member (27) lying between feed connection (17) and return connection (21), and with a filter (13) connected into the feed side of the injection pump (12), characterized in that the the bimetal element is designed as a snap disc (47) which assumes the function of the control member and interacts with a fixed valve seat (46), in that the drain connection (23) is connected to the inlet of the filter (13) and the feed connection (17) is constantly in connection via a venting throttle (29) with the return connection (21), the venting throttle (29) being connected in parallel with the control member (27; 48).

2. Apparatus according to Claim 1, characterized in that the venting throttle (29) is arranged in the bimetal snap disc (48), in particular centrally.

3. Apparatus according to Claim 2, characterized in that the valve seat is designed as an O-ring (46).

4. Apparatus according to one of Claims 2 or 3, characterized in that the bimetal snap disc (47) is supported at its outer periphery in the housing (33) by a retaining spring (48).

5. Apparatus according to one or more of Claims 1 to 4, characterized in that the feed connection (17) and the return connection (21) are designed on opposite sides of a housing (33), and a bore hole (36), assigned to the drain connection (23), runs transverse to these connections (17, 21), and in that the housing (33) can be fixed to a feed connection of a filter cover (32) by a hollow screw (37) which can be inserted through this bore hole (36), the hollow screw (37) receiving the pressure control valve (31).

6. Apparatus according to Claim 5, characterized in that the valve seat (46) with bimetal snap disc (47) and venting space (44) are arranged above, and the hollow screw (37) is arranged below the longitudinal axis formed by feed connection (17) and drain connection (21) in the housing (33).

7. Apparatus according to one of Claims 1 to 6, characterized in that the bimetal snap disc (47), in its blocking position in cold operation, rests only against the valve seat (26, 46) and its outer rim forms with the housing shoulder (49) an annular gap via which the venting space (44) is in connection with the return connection (21).

**FIG.1**

**FIG.2**

FIG.3

FIG.4